# Europäisches Patentamt
# European Patent Office
# Office européen des brevets

(19)

(11) Numéro de publication: **0 041 730**
**B1**

(12) **FASCICULE DE BREVET EUROPEEN**

(45) Date de publication du fascicule du brevet:
**31.08.83**

(21) Numéro de dépôt: **81104456.9**

(22) Date de dépôt: **10.06.81**

(51) Int. Cl.³: **F 16 H 3/66**

(54) Boîte de vitesses à quatre vitesses avant et deux vitesses arrière.

(30) Priorité: **11.06.80 FR 8013006**

(43) Date de publication de la demande:
**16.12.81 Bulletin 81/50**

(45) Mention de la délivrance du brevet:
**31.08.83 Bulletin 83/35**

(84) Etats contractants désignés:
**DE GB IT NL SE**

(56) Documents cités:
**FR-A-1 055 876**
**FR-A-1 518 867**
**FR-A-2 345 630**
**GB-A-471 394**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Mercier, Jacques, 5, rue Alasseur,
F-75015 Paris (FR)**
Inventeur: **Rameau, Jean, 3, rue de Pointe Robert,
F-95110 Sannois (FR)**

(74) Mandataire: **Casalonga, Axel et al, BUREAU D.A.
CASALONGA OFFICE JOSSE & PETIT
Baaderstrasse 12-14, D-8000 München 5 (DE)**

ACTORUM AG

Boîte de vitesses à quatre vitesses avant et deux vitesses arrière

La présente invention concerne les changements de vitesses à trains d'engrenages épicycloïdaux associés à un convertisseur de couple.

Les changements de vitesses de ce type comportent des trains d'engrenages épicycloïdaux dont un ou plusieurs éléments en rotation, planétaire, châssis porte-satellites et couronne, sont reliés d'un train à l'autre, comme illustré dans le brevet FR-A-1 055 876 au nom de Ravigneaux. Dans d'autres changements de vitesses de ce type le train planétaire complexe comporte des satellites engrenant simultanément avec des planétaires et/ou des couronnes placées côte à côte sur un même axe, comme illustré sur la fig. 4 de ce même brevet antérieur.

Dans tous ces types le mouvement de rotation est introduit par un ou plusieurs embrayages vers un ou plusieurs éléments du ou des trains planétaires. Les différents rapports sont obtenus par l'action successive ou simultanée sur les embrayages et/ou sur des dispositifs d'immobilisation des éléments en rotation.

Généralement les changements de vitesses connus permettant d'obtenir quatre rapports de vitesses en marche avant comportent trois trains planétaires associés commandés par cinq organes de contrôle (embrayages ou dispositifs d'immobilisation), par exemple trois freins et deux embrayages dans le dernier exemple ci-dessus.

Le but de l'invention est de réaliser un train épicycloïdal complexe ayant les mêmes possibilités que trois trains simples en ayant cependant un encombrement axial équivalent à deux trains simples.

Pour cela l'invention utilise un train épicycloïdal complexe associé à un convertisseur de couple, et formé par seulement deux trains qui comportent chacun un planétaire et une couronne, et trois groupes de satellites supportés par un châssis porte-satellites commun, avec comme caractéristique

- que chaque satellite (20) du premier groupe engrène à la fois avec la couronne du premier train et avec un des satellites du troisième groupe,
- que chaque satellite du second groupe engrène à la fois avec le planétaire, avec la couronne du deuxième train et avec un des satellites du troisième groupe, et
- que chaque satellite du troisième groupe engrène à la fois avec le planétaire du premier train, avec un des satellites du premier groupe et avec un des satellites du deuxième groupe.

L'invention permet ainsi d'obtenir quatre rapports en marche avant, avec une gamme pouvant atteindre 4, et en outre, deux rapports de marche arrière avec des organes de commande limités à deux embrayages et trois dispositifs d'immobilisation.

Un des embrayages est constamment en prise pour tous les rapports de marche avant; l'autre embrayage est utilisé pour la prise directe et les marches arrière.

Le train épicycloïdal comprend deux planétaires pouvant être liés en rotation à la turbine du convertisseur respectivement par l'un et l'autre des embrayages.

La couronne du premier train est l'élément de sortie de puissance.

Le châssis porte-satellites est commun aux deux trains et supporte trois groupes de satellites dont un groupe de satellites longs assurant la liaison en rotation avec le planétaire du premier train et les satellites du second train.

L'invention s'applique particulièrement aux mécanismes de changements de vitesses comportant un convertisseur de couple et des organes de commande hydrauliques, et plus particulièrement à ceux destinés à la propulsion des véhicules.

D'autres particularités de l'invention apparaîtront dans la description qui va suivre d'un mode de réalisation pris comme exemple et représenté sur le dessin annexé, sur lequel:

la fig. 1 est une vue schématique en coupe longitudinale dans laquelle les axes des satellites ont été ramenés dans le plan de coupe pour faciliter la compréhension;

la fig. 2 est une coupe transversale schématique du premier train épicycloïdal;

la fig. 3 est une coupe transversale par le plan intermédiaire entre les deux trains épicycloïdaux;

la fig. 4 est une coupe transversale schématique du deuxième train épicycloïdal.

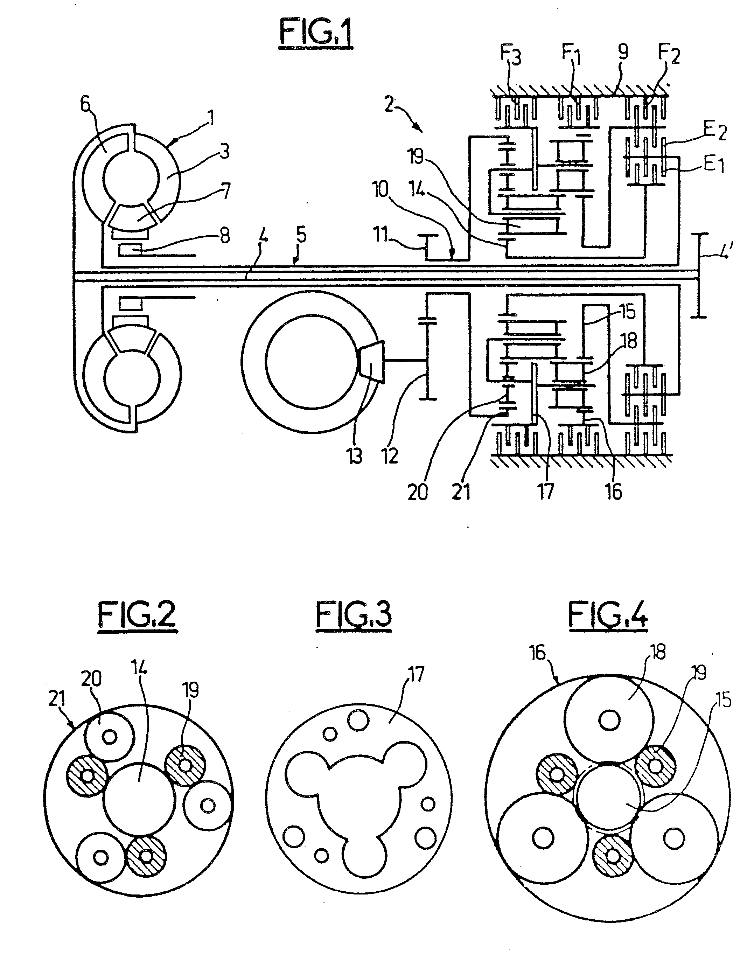

Dans l'exemple non limitatif qui fait l'objet de la description détaillée, la transmission automatique est telle que représentée sur la fig. 1.

La transmission comprend un convertisseur hydrocinétique de couple 1 et une boîte de vitesses à train épicycloïdal 2. Le convertisseur de couple 1 comprend de manière classique trois éléments:

- l'impulseur ou pompe 3 relié au moteur d'entraînement du véhicule (non représenté) et entraînant la pompe de servitude 4' de la boîte de vitesses 2 par l'intermédiaire d'un arbre 4 qui traverse la boîte de vitesses 2;
- une turbine 6 dont l'arbre 5 constitue l'arbre d'entrée de la boîte de vitesses 2, et
- un réacteur 7 supporté par un mécanisme de roue libre 8.

Le train d'engrenage épicycloïdal 2 est logé dans le carter de mécanisme 9. Il reçoit le couple de la turbine 6 du convertisseur 1 par l'intermédiaire de l'arbre d'entrée 5 et le transmet par l'intermédiaire de l'arbre de sortie 10 et de deux pignons de descente 11 et 12 au couple conique 13 qui transmet le couple aux roues du véhicule par l'intermédiaire d'un différentiel classique.

Les différents rapports de transmission sont obtenus au moyen d'un premier embrayage $E_1$, d'un deuxième embrayage $E_2$, d'un premier frein $F_1$, d'un deuxième frein $F_2$ et d'un troisième frein $F_3$.

Les deux embrayages et les trois freins peuvent être commandés de manière classique par un dispositif hydraulique assurant le serrage d'un système à disques mutiples ou par tout autre dispositif connu.

Le premier embrayage $E_1$, utilisé exclusivement pour la marche avant, transmet le couple de l'arbre 5 de la turbine 6, ou arbre d'entrée, au planétaire 14 du premier train qui se trouve en prise avec un premier groupe de satellites longs 19 supporté par le châssis porte-satellites commun 17.

Le second embrayage $E_2$ utilisé pour le quatrième rapport et les deux marches arrière transmet le couple de l'arbre d'entrée 5 au planétaire 15 du second train qui se trouve en prise avec le groupe de satellites 18 supporté par le châssis porte-satellites commun 17.

Le groupe de satellites 18 engrène en outre, d'une part avec le groupe de satellites longs 19, d'autre part avec la couronne 16 qui peut être immobilisée par le frein $F_1$. Le planétaire 15 peut être immobilisé par un frein $F_2$. Le châssis porte-satellites 17 peut être immobilisé par un frein $F_3$.

Le groupe de satellites longs 19 engrène, en plus du groupe de satellites 18, avec un groupe de satellites 20 supportés par le châssis porte-satellites commun 17. Ce dernier groupe de satellites 20 du premier train engrène par ailleurs avec la couronne 21 solidaire de l'arbre de sortie 10 et du pignon de descente 11.

Les différents rapports de vitesses possibles résultent des différentes combinaisons possibles entre planétaires et couronne donnant les raisons suivantes:

pour le train 1: $R_1 = \dfrac{C1}{p1}$

pour le train 2: $R_2 = \dfrac{C2}{p2}$

pour les trains 1 et 2 combinés $Ra = \dfrac{C1}{p2}$

$Rb = \dfrac{C2}{p1}$     $Rc = \dfrac{p2}{p1}$     $Rd = \dfrac{p1}{p2}$

en admettant que:

C1 représente le nombre de dents de la couronne 21
C2 le nombre de dents de la couronne 16
p1 le nombre de dents du planétaire 14
p2 le nombre de dents du planétaire 15.

Les différents rapports de vitesses retenus sont obtenus de la manière suivante:
Pour le premier rapport, l'embrayage $E_1$ et le frein $F_1$ sont serrés et la vitesse obtenue a pour valeur:

$$\frac{(Rb - 2)\,R1}{Rb-1}$$

de la vitesse turbine.

Pour le second rapport, l'embrayage $E_1$ et le frein $F_2$ sont serrés et la vitesse obtenue a pour valeur

$$\frac{1}{Rb}$$

de la vitesse turbine.

Pour le troisième rapport, l'embrayage $E_1$ et le frein $F_3$ sont serrés et la vitesse obtenue a pour valeur:

$$\frac{1}{R1} \cdot \frac{(2\,Rd + 1)}{(Rd -1)}$$

de la vitesse turbine.

Pour le quatrième rapport les deux embrayages $E_1$ et $E_2$ sont serrés et le mécanisme tourne en bloc de sorte que la vitesse de sortie est égale à la vitesse turbine, réalisant ainsi une prise directe.

Pour le premier rapport de marche arrière l'embrayage $E_2$ et le frein $F_1$ sont serrés et la vitesse obtenue a pour valeur:

$$-\frac{1}{Ra} \left[ 1 - (1 + Ra)\,\frac{1/R2}{1+1/R2} \right]$$

de la vitesse turbine.

Pour le second rapport de marche arrière l'embrayage $E_2$ et le frein $F_2$ sont serrés, et la vitesse obtenue a pour valeur

$$-\frac{1}{Ra}$$

de la vitesse turbine.

Pour illustrer les possibilités d'un train épicycloïdal complexe selon l'invention, un exemple de réalisation est donné ci-dessous:
soit un train épicycloïdal dont les caractéristiques des divers éléments intervenant dans le calcul des rapports ont pour valeurs:
38 dents et 32 dents pour les planétaires P1 et P2 respectivement, 79 dents et 121 dents pour les couronnes C1 et C2 respectivement.

Tous calculs faits, un tel train permet d'obtenir une gamme de 4, les différents rapports donnant les vitesses suivantes à l'arbre de sortie 10, pour une vitesse d'entrée égale à l'unité de l'arbre de turbine 5:

En marche avant: 0,25 pour le premier, 0,48 pour le second, 0,74 pour le troisième, et 1,00 pour le quatrième en prise directe.

En marche arrière: 0,11 pour le premier et 0,40 pour le second rapport.

L'exemple ci-dessus n'est pas limitatif et d'autres caractéristiques peuvent être choisies, dans la limite toutefois des conditions géométriques de mise en place des éléments comme il peut être vu sur les fig. 2, 3 et 4, sans sortir du cadre de l'invention.

Le tableau ci-dessous résume le fonctionnement du dispositif décrit et donné à titre d'exemple. Sur ce tableau, la colonne de gauche indique les rapports de vitesses avec en correspondance sur chaque ligne horizontale, une croix indiquant le ou les éléments activés pour obtenir ce rapport. La colonne de droite indique la valeur des vitesses obtenues pour les différents rapports pour l'exemple donné ci-dessus.

|       | E1 | E2 | F1 | F2 | F3 | Vitesse |
|-------|----|----|----|----|----|---------|
| 1     | X  |    | X  |    |    | 0,25    |
| 2     | X  |    |    | X  |    | 0,48    |
| 3     | X  |    |    |    | X  | 0,74    |
| 4     | X  | X  |    |    |    | 1,00    |
| MAR.1 |    | X  | X  |    |    | 0,11    |
| MAR.2 |    | X  |    | X  |    | 0,40    |

### Revendications

1. Changement de vitesses à train épicycloïdal associé à un convertisseur de couple (1), avec un dispositif de commande à plusieurs positions actionnant selon diverses combinaisons des organes de commande, freins et embrayages, en liaison avec les divers éléments du train, pour obtenir divers rapports de marche avant et de marche arrière, ce train étant un train complexe formé d'un premier train (14, 21) et d'un deuxième train (15, 16), qui comportent chacun un planétaire et une couronne, et trois groupes de satellites (20, 18, 19) supportés par un châssis porte-satellites commun (17), caractérisé par le fait

- que chaque satellite (20) du premier groupe engrène à la fois avec la couronne (21) du premier train (14, 21) et avec un des satellites (19) du troisième groupe,
- que chaque satellite (18) du second groupe engrène à la fois avec le planétaire (15), avec la couronne (16) du deuxième train (15, 16) et avec un des satellites (19) du troisième groupe, et
- que chaque satellite (19) du troisième groupe engrène à la fois avec le planétaire (14) du premier train, avec un des satellites (20) du premier groupe, et avec un des satellites (18) du deuxième groupe.

2. Changement de vitesses à train épicycloïdal selon la revendication 1, caractérisé par le fait

- que les satellites (19) du troisième groupe sont constitués par des satellites longs présentant une denture unique, et
- que les satellites (18) du deuxième groupe sont constitués de même par des satellites longs présentant une denture unique.

3. Changement de vitesses à train épicycloïdal selon une des revendications 1 et 2, dans lequel un premier embrayage (E$_1$) relie le premier (14) des planétaires à un arbre d'entrée (5) provenant du convertisseur (1), tandis que trois freins (F$_1$, F$_2$, F$_3$), susceptibles d'immobiliser respectivement la seconde couronne (16), le second planétaire (15) et le porte-satellites (17), sont serrés sélectivement par le dispositif de commande respectivement pour trois des rapports successifs de marche avant, caractérisé par le fait que cet premier embrayage (E$_1$) est embrayé par le dispositif de commande pour toutes les combinaisons correspondant aux divers rapports de marche avant.

4. Changement de vitesse à train épicycloïdal selon une quelconque des revendications 1 à 3, caractérisé par le fait qu'un second embrayage (E$_2$) relie le second planétaire (15) audit arbre d'entrée (5), et est embrayé par le dispositif de commande pour les combinaisons correspondant à deux rapports de marche arrière, et que deux desdits freins (F$_1$, F$_2$) susceptibles d'immobiliser respectivement la seconde couronne (16) et le second planétaire (15), sont serrés sélectivement par le dispositif de commande respectivement pour lesdits deux rapports de marche arrière.

5. Changement de vitesses à train épicycloïdal selon les revendications 3 et 4 prises dans leur ensemble, caractérisé par le fait que le dispositif de commande comporte une position correspondant à une combinaison supplémentaire qui assure l'embrayage simultané des deux embrayages (E$_1$, E$_2$) sans serrer aucun des trois freins (F$_1$, F$_2$, F$_3$) de manière à obtenir un quatrième rapport de marche avant par une rotation en bloc du train complexe qui élimine les pertes dans les engrenages.

### Claims

1. An epicyclic gearbox combined with a torque converter (1), with a multi-position operating system actuating the operating components, brakes and clutches, in various combinations in conjunction with the various gearbox elements so as to obtain a range of forward and reverse drive ratios, with the gearbox consisting of a complex train formed by a first train (14, 21) and a second train (15, 16), which each comprise a sun wheel and an annulus, and three sets of planet wheels (20, 18, 19) carried by a common planet carrier frame (17), characterized in that:

- each planet (20) of the first set meshes with both the annulus (21) of the first train (14, 21) and one of the planets (19) of the third set,
- each planet (18) of the second set meshes with the sun wheel (15), with the annulus (16) of the second train (15, 16) and with one of the planets (19) of the third set, all at the same time, and
- each planet (19) of the third set meshes with the sun wheel (14) of the first train, with one of the planets (20) of the first set, and with one of the planets (18) of the second set, all at the same time.

2. The epicyclic gearbox according to claim 1, characterized in that:

- the planets (19) of the third set consist of long planet wheels having a single gear tooth system, and

- the planets (18) of the second set are similarly formed by long planet wheels having a single gear tooth system.

3. The epicyclic gearbox according to claims 1 and 2, wherein a first clutch ($E_1$) connects the first (14) of the sun wheels to an input shaft (5) from the torque converter (1), whilst the three brakes ($F_1$, $F_2$, $F_3$) which are able to lock respectively the second annulus (16), the second sun wheel (15) and the planet carrier (17) are selectively applied by the operating system, respectively for three of the forward drive ratios in succession, characterized in that this first clutch ($E_1$) is engaged by the operating system for all the combinations corresponding to the various forward drive ratios.

4. The epicyclic gearbox according to any of claims 1 to 3, characterized in that a second clutch ($E_2$) connects the second sun wheel (15) to the said input shaft (5), and is engaged by the operating system for the combinations corresponding to two reverse drive ratios, and in that two of the said brakes ($F_1$, $F_2$) which are able to lock respectively the second annulus (16) and the second sun wheel (15) are selectively applied by the operating system, respectively for the said two reverse drive ratios.

5. The epicyclic gearbox according to claims 3 and 4 taken together, characterized in that the operating system comprises a position corresponding to an additional combination which provides for simultaneous engagement of the two clutches ($E_1$, $E_2$) without applying any of the three brakes ($F_1$, $F_2$, $F_3$), so obtaining a fourth forward drive ratio by rotation of the complex train as one piece, en bloc, which eliminates losses in the gears.

**Patentansprüche**

1. Schaltgetriebe mit Umlaufgetriebezug, verbunden mit einem Drehmomentwandler, mit einer Steuervorrichtung mit mehreren Stellungen, die in Verbindung mit den verschiedenen Elementen des Zuges Steuerorgane, Bremsen und Kupplungen in unterschiedlichen Kombinationen betätigt, um unterschiedliche Vorwärtsgänge und Rückwärtsgänge zu erhalten, wobei dieser Zug mehrteilig ist und aus einem ersten Zug (14, 21) und einem zweiten Zug (15, 16), die jeweils ein Planetenrad und einen Zahnkranz umfassen, sowie aus drei Gruppen Satellitenräder (20, 18, 19), die von einem gemeinsamen Satellitenträgerrahmen (17) getragen werden, besteht, dadurch gekennzeichnet,

- dass jedes Satellitenrad (20) der ersten Gruppe gleichzeitig mit dem Zahnkranz (21) des ersten Zuges (14, 21) und mit einem der Satellitenräder (19) der dritten Gruppe im Eingriff steht,
- dass jedes Satellitenrad (18) der zweiten Gruppe gleichzeitig mit dem Planetenrad (15), mit dem Zahnkranz (16) des zweiten Zuges (15, 16) und mit einem der Satellitenräder (19) der dritten Gruppe in Eingriff steht,
- dass jedes Satellitenrad (19) der dritten Gruppe gleichzeitig mit dem Planetenrad (14) des ersten Zuges, mit einem der Satellitenräder (20) der ersten Gruppe und mit einem der Satellitenräder (18) der zweiten Gruppe in Eingriff steht.

2. Schaltgetriebe mit Umlaufgetriebezug gemäss Anspruch 1, dadurch gekennzeichnet,

- dass die Satellitenräder (19) der dritten Gruppe aus langen Satellitenrädern bestehen, die eine Einzelverzahnung aufweisen,
- dass die Satellitenräder (18) der zweiten Gruppe ebenfalls aus langen Satellitenrädern bestehen, die eine Einzelverzahnung aufweisen.

3. Schaltgetriebe mit Umlaufgetriebezug gemäss einem beliebigen der Ansprüche 1 und 2, in dem eine erste Kupplung ($E_1$) das erste Planetenrad (14) mit einer Eingangswelle (5) verbindet, die vom Drehmomentwandler (1) herkommt, während drei Bremsen ($F_1$, $F_2$, $F_3$), die dazu dienen, den zweiten Zahnkranz (16), das zweite Planetenrad (15) bzw. den Satellitenträger (17) zu verriegeln, wahlweise von der Steuervorrichtung jeweils für drei der aufeinanderfolgenden Vorwärtsgänge angezogen werden, dadurch gekennzeichnet, dass diese erste Kupplung ($E_1$) von der Steuervorrichtung für alle Kombinationen entsprechend den verschiedenen Vorwärtsgängen eingerückt wird.

4. Schaltgetriebe mit Umlaufgetriebezug gemäss einem beliebigen der Ansprüche 1 bis 3, dadurch gekennzeichnet, dass eine zweite Kupplung ($E_2$) das zweite Planetenrad (15) mit der genannten Eingangswelle (5) verbindet und von der Steuervorrichtung für die Kombinationen, die zwei Rückwärtsgängen entsprechen, eingerückt wird, und dass zwei der genannten Bremsen ($F_1$, $F_2$), die dazu dienen, jeweils den zweiten Zahnkranz (16) und das zweite Planetenrad (15) zu verriegeln, wahlweise von der Steuervorrichtung jeweils für die beiden genannten Rückwärtsgänge angezogen werden.

5. Schaltgetriebe mit Umlaufgetriebezug gemäss Ansprüchen 3 und 4 zusammen, dadurch gekennzeichnet, dass die Steuervorrichtung eine einer zusätzlichen Kombination entsprechende Stellung enthält, die das gleichzeitige Einrücken der beiden Kupplungen ($E_1$, $E_2$) sichert ohne eine der drei Bremsen ($F_1$, $F_2$, $F_3$) anzuziehen, so dass durch die blockweise Rotation des gesamten mehrteiligen Zuges ein vierter Vorwärtsgang erhalten wird, was die Verluste in den Verzahnungen ausschliesst.

# FIG.1

# FIG.2

# FIG.3

# FIG.4